# EUROPEAN PATENT SPECIFICATION

(11) **EP 3 135 425 B1**
(45) Date of publication and mention of the grant of the patent: **02.01.2019**
(21) Application number: 16185930.1
(22) Date of filing: 26.08.2016
(51) Int. Cl.: B23K 26/342, B29C 67/00, B33Y 10/00, B33Y 30/00, B23K 26/70, B29C 64/141

(54) **METHOD AND APPARATUS FOR RAPIDLY MANUFACTURING THREE-DIMENSIONAL OBJECTS FROM A PLURALITY OF LAYERS**
VERFAHREN UND VORRICHTUNG ZUR SCHNELLEN HERSTELLUNG DREIDIMENSIONALER OBJEKTE AUS MEHREREN SCHICHTEN
PROCÉDÉ ET APPAREIL DE FABRICATION RAPIDE D'OBJETS TRIDIMENSIONNELS À PARTIR D'UNE PLURALITÉ DE COUCHES

(30) Priority: 27.08.2015 US 201562210729 P; 24.08.2016 US 201615245715
(43) Date of publication of application: 01.03.2017
(73) Proprietor: Hexcel Corporation, Stamford, CT 06901 (US)
(72) Inventor: DeFelice, Scott, Holyoke, MA 01040 (US); DeCarmine, Anthony, Lebanon, CT 06249 (US)
(74) Representative: Bjerkéns Patentbyrå KB (Stockholm)

(56) References cited:
- EP-A1- 2 857 179
- JP-A- S 626 789
- US-A1- 2015 136 318

## Description

The present invention relates to the production of large components. More specifically, the present invention relates to the additive fabrication of wing spars via the process of laser fused lamination.

### BACKGROUND

Large aerospace components such as wing spars are typically constructed by traditional machining processes. Such processes require sourcing large foundry castings, which regularly have long lead times. Additionally, it is difficult to work-hold and manipulate the large foundry castings necessary to manufacture large aerospace components. Accordingly, the process is costly and time consuming.

Large aerospace components are also manufactured using traditional laminated object manufacturing ("LOM"). LOM is a rapid prototyping system in which metal laminates are successively glued together and cut to shape with a knife or laser cutter. Objects printed with this technique may be additionally modified by machining or drilling after printing.

A disadvantage LOM is it requires a third body adhesive such as glue or a brazing foil layer that is effective with heat or curing chemistry. The use of an adhesive restricts flexibility in process and forces the existence of an undesired added material and structure differing from the bulk material.

It is also known to manufacture large aerospace components using ultrasonic joining methods. Ultrasonic welding is an industrial technique whereby high-frequency ultrasonic acoustic vibrations are locally applied to workpieces being held together under pressure to create a solid-state weld. A disadvantage of ultrasonic welding techniques is that they limit component flexibility during the manufacturing process and the methods cannot adequately fuse large components.

Large aerospace components are also manufactured utilizing additive manufacturing techniques, which have proven to be a sufficient alternative, as components can be manufactured in a cheap, efficient, and quick manner. Several additive manufacturing techniques have been proposed, such as Sciaky E-Beam and laser sintering, to produce aerospace components. A disadvantage of these techniques, however, is they may still utilize large foundry castings and are unable to sufficiently join together components of larger sizes. Additionally, these methods significantly alter the metallurgy composition of each component and result in a high percentage of HAZ-like material in the final work piece. HAZ or heat-affected zone is the area of base material, either a metal or a thermoplastic, which is not melted and has had its microstructure and properties altered by welding or heat intensive cutting operations. The heat from the welding process and subsequent re-cooling causes this change from the weld interface to the termination of the sensitizing temperature in the base metal. The extent and magnitude of property change depends primarily on the base material, the weld filler metal, and the amount and concentration of heat input by the welding process.

The formation of HAZ is a disadvantage because it significantly weakens the durability and strength of each component. Therefore, the known methods have quality control issues and cannot be reliably utilized in the aerospace industry.

It is an object of the present invention to overcome these disadvantages and other disadvantages associated with the prior art.

Another object the present invention is to provide an improved, less expensive additive manufacturing technique to additively construct high-quality, large components using more accessible processes and more readily available components.

Another object of the present invention is to use an additive manufacturing technique to bypass the need to work with large foundry casings to form aerospace components, including wing spars.

Another object of the present invention is to use manufacturing processes that allows for component flexibility during manufacturing and minimizes undesired material and structure on the resulting final product.

Another object of the present invention is to preserve as much of the original metallurgy as possible and to provide a small fusion zone and minimize HAZ.

EP 2857179 A1 discloses a system corresponding to the preamble of the present claim 1.

### SUMMARY

It is an object of the present invention to provide a system and method that overcomes the problems with the prior art.

These and other objects of the present invention are achieved by a system as defined in claim 1.

In yet another embodiment of the present invention, the first lamina and the second lamina are metal.

In yet another embodiment of the present invention, the energy source is a laser and the system includes an imaging system having one or more lenses to direct the light from the laser to the fusion zone.

According to the present invention, the first lamina and the second lamina have precut cross sections corresponding to a desired cross section of the three-dimensional laminated object.

In yet another embodiment of the present invention, the first lamina and the second lamina include supports and the holder is configured to fix the first lamina to the second lamina via the supports.

In yet another embodiment of the present invention, the holder is configured to align the first lamina relative to the second lamina using one or more of dimensional features of the first and second lamina and optical markings on the first and second lamina.

in yet another embodiment of the present invention the fusion of the first lamina to the second lamina results in thin fusion area leaving 80-90% of the original material in the first lamina and the second lamina unaffected by heat of fusion.

In yet another embodiment of the present invention, the system includes a temperature sensor to monitor the temperature at the area of fusion.

In yet another embodiment of the present invention the system includes a controller that can adjust the energy emitted by the laser based at least in-part the temperature of the area of fusion.

Yet another embodiment of the present provides for a method of manufacturing a three-dimensional work piece from a plurality of laminae as defined in claim 9.

In yet other embodiments of the present invention, the first lamina and the second lamina are metal.

In yet other embodiments of the present invention, the method includes the step of fusing the first lamina to the second lamina by a laser.

According to the present invention, the method includes the step of cutting the first lamina and the second lamina to have a cross section that corresponds to a cross section of the desired three-dimensional object.

In yet another embodiment of the present invention, the cross section of the lamina is cut using one or more of laser cutting, plasma cutting, and waterjet cutting.

In yet another embodiment of the present invention, the method includes the step of providing a roller, wherein the roller biases the first lamina to the second lamina.

In yet another embodiment of the present invention, the method includes the step of providing a holder to align the first lamina relative to the second lamina using one or more of the dimensional features of the first and second lamina and optical markings on the first and second lamina.

In yet another embodiment of the present invention, a thin fusion area is created leaving 80-90% of the original material in the first lamina and the second lamina unaffected by heat of fusion.

In yet another embodiment of the present invention, the method includes the step of monitoring the temperature at the fusion zone.

In yet another embodiment of the present invention, the method includes the step of adjusting the power of the laser based at least in part on the temperature of the fusion zone.

The invention and its particular features and advantages will become more apparent from the following detailed description considered with reference to the accompanying drawings.

### BRIEF DESCRIPTION OF THE DRAWINGS

FIG. 1 is a side view showing a schematic of a system and method in accordance with the present invention.
FIG. 2 illustrates a cross section view of a plurality of lamina.
FIG. 3 illustrates an exploded perspective view of the laminae show in FIG. 2, wherein the laminae have been cut in accordance with dimensions of the desired three-dimensional object.

### DETAILED DESCRIPTION

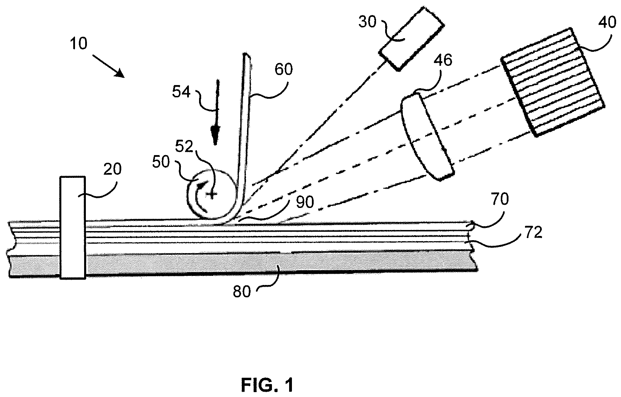

FIG. 1 schematically illustrates a system 10 for the manufacture of objects having various shapes and forms from a plurality of laminae 72. The system 10 uses an energy source 40 to emit energy and direct it to a fusion zone 90. The energy causes the laminae to fuse to each other at the fusion zone 90. The energy source 40 may be any source that can provide sufficient energy to the fusion zone to provide for fusion of the lamina. For example, the energy source 40 may be a CO₂ laser. In some embodiments, the energy source 40 may be a laser array. In the embodiment shown, an optical system 46 is provided for focusing the energy source on fusion zone 90. In some embodiments of the present invention, the fusion zone 90 extends along an axis perpendicular to the longitudinal axis of the lamina 72. The energy source 40 may simultaneously provide energy to the entire fusion zone 90. Alternatively, the optical system 46 can sweep the energy source in the fusion zone 90.

As shown in FIG. 1, several laminae 72 have been welded together and are supported by a table 80. The table supports 80 a plurality of laminae that have been fused together 72, a first lamina 70 and a second lamina 60. In the embodiment shown 10 the first lamina 70 has been fused to a top surface of the existing work piece 72, which comprises the plurality of lamina fused together. The second lamina 60 is welded to the first lamina 70. A person of ordinary skill in the art and familiar with this invention will understand that the invention relates to a system and method for manufacturing an object using N number of layers. After N layer is fused a second N+1 laser is fused. This process is repeated until a desired three-dimensional object is formed.

The system 10 includes a roller 50 that is configured to rotate about a roller axis 82. An actuator 54 biases the roller 50 toward the table 80 so as to compress the first lamina 80 and the second lamina 70 and thereby cause them to come together. In the embodiment shown in FIG. 1, the first lamina 70, the second lamina 60, and the plurality of previously welded lamina 72 are compressed. Proximate to the area where the roller 50 contacts the second lamina 60 a fusion zone 90 is formed. In the embodiment show in FIG. 1, this is the point where the first lamina 70 and the second lamina 60 come together. In the embodiment disclosed, the fusion zone 90 is perpendicular to the longitudinal axis of the first and second lamina 70, 60 and extends generally parallel to the roller axis 52. The roller 50 is configured to rotate about the roller axis 52. The workpiece 72 is supported on the table 80. In FIG. 1, welding table 80 movably supports the workpiece 72 relative to laser 40 and roller 50 for forming complex three dimensional components. Alternatively, laser 40 and roller 50 can be movably supported relative to the workpiece 72 or fixed table 80. In either manner, it is possible to advance the fusion zone 90 along the longitudinal axis of laminae. As the fusion zone 90 is advanced along the longitudinal axis, energy is supplied to the fusion zone 90 to fuse a top surface of the first lamina 70 to a bottom surface of the second lamina 60. By repeating this process with successive lamina is it possible to manufacture a three-dimensional object.

In accordance with the present invention, the laminae are precut in accordance with a desired cross section of the three-dimensional workpiece prior to fusing. This allows the inventive system to build a three-dimensional work piece having a predetermined cross section and thus reduce waste material and minimize post-fusion finishing time. The laminae are precut at a predetermined thickness, appropriate to the part being fused to at least another laminae. In some embodiments of the present invention, the laminae are precut using near-zero-pressure cutting approaches to create kerfless laminae, or other known industrial processes such as laser cutting, plasma cutting, waterjet cutting, and other methods known in the art.

In some embodiments of the present invention, the laminae can be made of metal, metal alloys, thermoplastics, thermoplastics without reinforcement, or any other suitable material.

The system in. FIG. 1 further includes a holder 20 that is configured to fix at least a portion of the first lamina 70 relative to the second lamina 60 so at least a portion of the top surface of the first lamina contacts a least a portion of the bottom surface of the second lamina. In some embodiments of the present invention, the holder 20 is robotically operated using a control system. In some embodiments, the holder uses a geometry of the first lamina 70 and a geometry of the second lamina 60 to align the lamina together in a predetermined fashion so as to facilitate fusing of the pieces in accordance with the desired three-dimensional object. In some embodiments of the present invention optical markings are placed on the laminae. According to one embodiment, a robotic system interprets the markings and places and positions laminae into the holder 20.

The holder 20 may include various locking elements to prevent the laminae from moving relative to each other during fusion. The locking mechanism can comprise a two-part connection system. Alternatively, locking mechanisms can comprise any known locking or connection system known in the art that would stabilize a single or plurality of lamina. In another embodiment, in addition to the holding fixture 20, a nut and bolt system, or another system known in the art can be used to retain the lamina in position.

In some embodiments of the present invention the first and second lamina 70, 60 are provided with supports. A support is a portion of the lamina that extends in the plane of the lamina, but is not intended to be part of the final object. The holder retains the supports supports enabling fusion along the entire surface of the lamina intended to be in the desired three-dimensional object. After the three-dimensional object is formed the supports can be removed.

The actuator 54 is configured to apply pressure onto first and second lamina 60, 70. Applying pressure causes a roll nip at the fusion zone 90. In some embodiments of the present invention, the actuator and/or roller 54 further includes electronics that controls the amount of pressure and the movement of roller 50 when fusing the first and second lamina 60, 70. According to one embodiment, roller 50 moves along the longitudinal axis of the support relative to the support, thereby advancing the fusion zone 90. According to another embodiment, roller element 50 moves separately or in coordination with energy source 40.

The energy source 40 emits an energy beam directed to the fusion zone 90. Energy source 40 may comprise a laser diode array, an electron beam, or another method of depositing energy, and may have a fixed or variable width corresponding to the width of a single lamina or the stacked laminae, or a width of the fusion zone. An energy source controller controls the intensity and width of energy beam. According to one embodiment, the energy source 40 moves along one, or multiple axis while emitting energy towards the fusion zone. According to another embodiment, the energy source 40 may move in conjunction, or separate from roller 40.

With care, the original metallurgy of the stacked laminae can be vastly preserved by emitting energy beam at the fusion zone 90 wherein the fused laminae may comprise 10-20% of a HAZ-like material and 80-90% of the lamina's original material as measured in the thickness of the laminae. The resulting structure resembles that of Damascus Steel or Japanese-forged laminates, both noted through history for their unique combination of hardness and elasticity. For example, in one embodiment of the invention, laminate 102 may be each 0.1 inches (2.54mm) thick. The HAZ-like material resulting from the fusion process may be 0.01 inches (0.254mm) thick.

The metallurgy of the stacked laminae can be manipulated by the use of dissimilar metallic strips, strips clad to create differing alloys only at the interface, metal matrix composite elements, and other approaches known to metallurgical art and science. Furthermore, according to another embodiment, the energy source may also be used to finish the surface of the part, by selective superficial re-melting, selective ablation, marking or other finishing approaches.

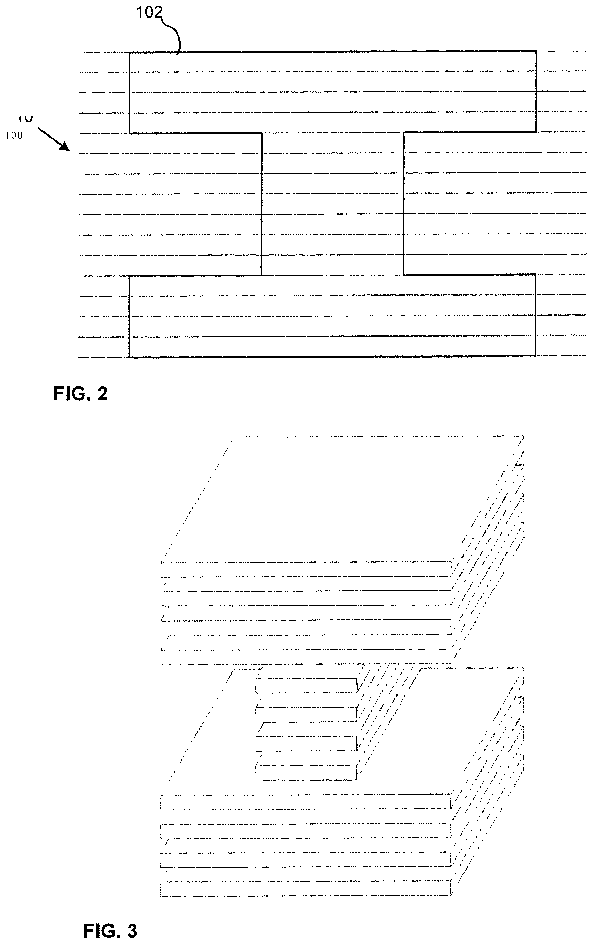

FIG. 2 illustrates a cross section of laminae 100 in accordance with the present invention. The cross section of a desired three dimensional object is illustrated in the form of a cross section of an I-beam in FIG. 2, shown in dark line 102. Each lamina of the plurality of laminae is precut, as illustrated in FIG. 3, prior to the fusing process. This step saves material and reduces post-fusion finishing.

In some embodiments of the present invention, it is possible to use a prepared laminate, similar to the clad metal described elsewhere, consisting of a thicker transparent (to the energy beam) structural layer bound to a thinner opaque (to energy beam) susceptor layer as feed stock, using the energy beam in a shoot-thru configuration where the beam will penetrate the structural layer without meaningful interaction then to be absorbed by the susceptor layer creating highly localized heat to affect the welding effect. This would preferably be affected mechanically similarly to other examples herein, with a roller system creating a moving nip point so as to exclude bubbles and manage thermal effect more precisely. The compositions of these layers are effectively unlimited, other than that the structural layer is transparent to the beam and adherent to the suscpetor layer; that the suspector layer is opaque to the beam and adherent to the structural layer; and that any interface so created is sound and useful for purpose. Alternatively, this laminate could be supplied to the fabricating system as two separate sheets, fed to the building area by an alternating feed system netting the same effect as the prepared laminate.

## Claims

1. A system for manufacturing a three-dimensional laminated object from a plurality of laminae, the system including a first lamina (70) and second lamina (60), the system comprising:
a support table (80) for the first lamina (70) and the second lamina (60), each said lamina being generally planar and having a top surface and a bottom surface;
a holder (20) configured to fix at least a portion of the first lamina (70) relative to the second lamina (60) so at least a portion of the top surface of the first lamina contacts at least a portion of the bottom surface of the second lamina;
a roller (50) positioned above the table and configured to traverse along a longitudinal axis, the first lamina (70) and the second lamina (60) being positioned between the support (80) and the roller (50);
an actuator (54) for biasing the roller towards the support to retain the first lamina and second lamina, the biasing forming a fusion zone (90) between the first lamina and the second lamina proximate to the roller;
an energy source (40) configured to emit energy to the fusion zone (90) to fuse the first lamina (70) and the second lamina (60) proximate to the fusion zone, **characterized in that**
the first lamina (70) and the second lamina (60) have precut cross sections corresponding to a desired cross section of the three-dimensional laminated object;
wherein each lamina of the plurality of laminae is precut prior to the fusing process corresponding to the desired cross section of the three-dimensional laminated object.

2. The system of claim 1, wherein the first lamina (70) and the second lamina (60) are metal.

3. The system of claim 2, wherein the energy source (40) is a laser and the system further comprises an imaging system (46) having one or more lenses to direct the light from the laser to the fusion zone (90).

4. The system of claim 1, wherein the first lamina (70) and the second lamina (60) include supports and the holder (20) is configured to fix lamina to the second lamina via the supports.

5. The system of claim 1, wherein the holder (20) is configured to align the first lamina (70) relative to the second lamina (60) using one or more of the dimensional features of the first and second lamina and optical markings on the first and second lamina.

6. The system of claim 2, wherein the energy source is adapted to create only a thin fusion area leaving 80-90% of the original material in the first lamina (70) and the second lamina (60) unaffected by heat of fusion.

7. The system of claim 6 further comprising an infrared temperature sensor to monitor the temperature at the area of fusion.

8. The system of claim 7, further comprising a controller, wherein the controller can adjust the energy emitted by the laser based at least in-part the temperature of the area of fusion.

9. A method of manufacturing a three-dimensional work piece from a plurality of laminae including a first lamina (70) and second lamina (60), the method comprising, including the steps of:
providing a first lamina (70) and a second lamina (60), each said lamina having a longitudinal axis;
fixing at least a portion of the first lamina (70) relative to the second lamina (60) so at least a portion of the top surface of the first lamina contacts at least a portion of the bottom surface of the second lamina;
biasing the first lamina toward the second lamina to create a fusion zone (90) between the first lamina (70) and the second lamina (60), the fusion zone being perpendicular to the longitudinal axis of the first and the second lamina;
fusing the first lamina (70) to the second lamina (60) at the fusion zone (90);
advancing the fusion zone (90) along the longitudinal axis of the first and second lamina while continuing to fuse the lamina at the advancing fusion zone so as to substantially fuse the first lamina to the second lamina;
repeating the fusion process by fusing n + 1 laminae onto a top surface of each n lamina until the three-dimensional work piece is complete; **characterized by**
cutting each of the n + 1 laminae to have a cross section that corresponds with a desired cross section of the desired three-dimensional object prior to the fusion process.

10. The method of claim 9, wherein the first lamina (70) and the second lamina (60) are metal.

11. The method of claim 9 or 10, further including the step of fusing the first lamina (70) to the second lamina (60) by a laser.

12. The method of claim 9, wherein cross section of the laminae are cut using one or more of laser cutting, plasma cutting, and waterjet cutting.

13. The method of claim 9, further comprising the step of providing a roller, wherein the roller biases the first lamina (70) to the second lamina (60).

14. The method of claim 13, further comprising the step of providing a holder to align the first lamina (70) relative to the second lamina (60) using one or more of the dimensional features of the first and second lamina and optical markings on the first and second lamina.

15. The method of claim 13, wherein only a thin fusion area is created leaving 80-90% of the original material in the first lamina (70) and the second lamina (60) unaffected by heat of fusion.

16. The method of claim 13 further comprising the step of monitoring the temperature at the fusion zone (90).

17. The method of claim 16 further comprising the step of adjusting the power of the laser based at least in part on the temperature of the fusion zone.

## Patentansprüche

1. System zur Herstellung eines dreidimensionalen laminierten Objekts aus einer Mehrzahl von Schichten, wobei das System eine erste Schicht (70) und eine zweite Schicht (60) enthält und das System umfasst:
einen Auflagetisch (80) für die erste Schicht (70) und die zweite Schicht (60), wobei jede Schicht im Allgemeinen planar ist und eine obere Oberfläche und eine untere Oberfläche aufweist;
einen Halter (20), der dazu ausgelegt ist, mindestens einen Abschnitt der ersten Schicht (70) in Bezug auf die zweite Schicht (60) zu fixieren, sodass mindestens ein Abschnitt der oberen Oberfläche der ersten Schicht mindestens einen Abschnitt der unteren Oberfläche der zweiten Schicht berührt;
eine Rolle (50), die über dem Tisch positioniert und dazu ausgelegt ist, entlang einer Längsachse zu laufen, wobei die erste Schicht (70) und die zweite Schicht (60) zwischen der Auflage (80) und der Rolle (50) positioniert sind;
ein Stellglied (54) zum Vorspannen der Rolle in Richtung des Trägers, um die erste Schicht und die zweite Schicht zu halten, wobei die Vorspannung eine Schmelzzone (90) zwischen der ersten Schicht und der zweiten Schicht in der Nähe der Rolle bildet;
eine Energiequelle (40), die dazu ausgelegt ist, Energie zu der Schmelzzone (90) auszustrahlen, um die erste Schicht (70) und die zweite Schicht (60) nahe der Schmelzzone zu verschmelzen, **dadurch gekennzeichnet, dass**
die erste Schicht (70) und die zweite Schicht (60) vorgeschnittene Querschnitte aufweisen, die einem gewünschten Querschnitt des dreidimensionalen laminierten Objekts entsprechen;
wobei jede Schicht der Mehrzahl von Schichten vor dem Schmelzvorgang entsprechend dem gewünschten Querschnitt des dreidimensionalen laminierten Objekts vorgeschnitten wird.

2. System nach Anspruch 1, wobei es sich bei der ersten Schicht (70) und der zweiten Schicht (60) um Metall handelt.

3. System nach Anspruch 2, wobei es sich bei der Energiequelle (40) um einen Laser handelt und das System ferner ein Abbildungssystem (46) mit einer oder mehreren Linsen umfasst, um das Licht vom Laser auf die Schmelzzone (90) zu richten.

4. System nach Anspruch 1, wobei die erste Schicht (70) und die zweite Schicht (60) Träger beinhalten und der Halter (20) dazu ausgelegt ist, über die Träger eine Schicht an der zweiten Schicht zu fixieren.

5. System nach Anspruch 1, wobei der Halter (20) dazu ausgelegt ist, die erste Schicht (70) in Bezug auf die zweite Schicht (60) unter Verwendung eines oder mehrerer der Abmessungsmerkmale der ersten und zweiten Schicht und optischer Markierungen auf der ersten und zweiten Schicht auszurichten.

6. System nach Anspruch 2, wobei die Energiequelle geeignet ist, nur einen dünnen Schmelzbereich zu erzeugen, der 80 - 90 % des Ausgangsmaterials in der ersten Schicht (70) und der zweiten Schicht (60) unbeeinflusst von der Schmelzwärme belässt.

7. System nach Anspruch 6, ferner umfassend einen Infrarot-Temperatursensor zum Überwachen der Temperatur im Schmelzbereich.

8. System nach Anspruch 7, ferner umfassend eine Steuerung, wobei die Steuerung die von dem Laser ausgestrahlte Energie basierend auf zumindest teilweise der Temperatur des Schmelzbereichs anpassen kann.

9. Verfahren zur Herstellung eines dreidimensionalen Werkstücks aus einer Mehrzahl von Schichten, umfassend eine erste Schicht (70) und eine zweite Schicht (60), wobei das Verfahren das Folgende umfasst, einschließlich der Schritte:
Bereitstellen einer ersten Schicht (70) und einer zweiten Schicht (60), wobei jede Schicht eine Längsachse aufweist;
Fixieren mindestens eines Abschnitts der ersten Schicht (70) in Bezug auf die zweite Schicht (60), sodass mindestens ein Abschnitt der oberen Oberfläche der ersten Schicht mindestens einen Abschnitt der unteren Oberfläche der zweiten Schicht berührt;
Vorspannen der ersten Schicht in Richtung der zweiten Schicht, um eine Schmelzzone (90) zwischen der ersten Schicht (70) und der zweiten Schicht (60) zu erzeugen, wobei die Schmelzzone senkrecht zur Längsachse der ersten und zweiten Schicht liegt;
Verschmelzen der ersten Schicht (70) mit der zweiten Schicht (60) an der Schmelzzone (90);
Vorrücken der Schmelzzone (90) entlang der Längsachse der ersten und zweiten Schicht, während die Schicht in der vorrückenden Schmelzzone weiter verschmolzen wird, um die erste Schicht mit der zweiten Schicht im Wesentlichen zu verschmelzen;
Wiederholen des Schmelzvorgangs durch Verschmelzen von n + 1 Schichten auf einer oberen Oberfläche jeder n Schicht, bis das dreidimensionale Werkstück vollständig ist; **gekennzeichnet durch**
Schneiden jeder der n + 1 Schichten vor dem Schmelzvorgang, um einen Querschnitt zu erhalten, der einem gewünschten Querschnitt des gewünschten dreidimensionalen Objekts entspricht.

10. Verfahren nach Anspruch 9, wobei es sich bei der ersten Schicht (70) und der zweiten Schicht (60) um Metall handelt.

11. Verfahren nach Anspruch 9 oder 10, ferner umfassend den Schritt des Verschmelzens der ersten Schicht (70) mit der zweiten Schicht (60) durch einen Laser.

12. Verfahren nach Anspruch 9, wobei die Querschnitte der Schichten unter Verwendung eines oder mehrerer der Verfahren Laserschneiden, Plasmaschneiden und Wasserstrahlschneiden geschnitten werden.

13. Verfahren nach Anspruch 9, ferner umfassend den Schritt des Bereitstellens einer Rolle, wobei die Rolle die erste Schicht (70) gegenüber der zweiten Schicht (60) vorspannt.

14. Verfahren nach Anspruch 13, ferner umfassend den Schritt des Bereitstellens eines Halters, um die erste Schicht (70) in Bezug auf die zweite Schicht (60) unter Verwendung eines oder mehrerer der Abmessungsmerkmale der ersten und zweiten Schicht und optischer Markierungen auf der ersten und zweiten Schicht auszurichten.

15. Verfahren nach Anspruch 13, wobei nur ein dünner Schmelzbereich erzeugt wird, der 80 - 90 % des Ausgangsmaterials in der ersten Schicht (70) und der zweiten Schicht (60) unbeeinflusst von der Schmelzwärme belässt.

16. Verfahren nach Anspruch 13, ferner umfassend den Schritt des Überwachens der Temperatur in der Schmelzzone (90).

17. Verfahren nach Anspruch 16, ferner umfassend den Schritt des Anpassens der Leistung des Lasers basierend zumindest teilweise auf der Temperatur der Schmelzzone.

## Revendications

1. Système pour la fabrication d'un objet tridimensionnel à partir d'une pluralité de strates, le système comprenant une première strate (70) et une seconde strate (60), le système comprenant :
une table de support (80) pour la première strate (70) et la seconde strate (60), chaque dite strate étant généralement plane et comprenant une surface supérieure et une surface inférieure ;
un dispositif de maintien (20) configuré pour fixer au moins une partie de la première strate (70) par rapport à la seconde strate (60) de sorte qu'au moins une partie de la surface supérieure de la première strate entre en contact avec au moins une partie de la surface inférieure de la seconde strate ;
un rouleau (50) positionné au-dessus de la table et configuré pour traverser le long d'un axe longitudinal, la première strate (70) et la seconde strate (60) étant positionnées entre le support (80) et le rouleau (50) ;
un actionneur (54) permettant de solliciter le rouleau en direction du support pour retenir la première strate et la seconde strate, la sollicitation formant une zone de fusion (90) entre la première strate et la seconde strate à proximité du rouleau ;
une source d'énergie (40) configurée pour émettre de l'énergie vers la zone de fusion (90) pour fusionner la première strate (70) et la seconde strate (60) à proximité de la zone de fusion, **caractérisé en ce que**
la première strate (70) et la seconde strate (60) comprennent des sections transversales prédécoupées correspondant à une section transversale souhaitée de l'objet stratifié tridimensionnel ;
dans lequel chaque strate de la pluralité de strates est prédécoupée avant le processus de fusion correspondant à la section transversale souhaitée de l'objet stratifié tridimensionnel.

2. Système selon la revendication 1, dans lequel la première strate (70) et la seconde strate (60) sont métalliques.

3. Système selon la revendication 2, dans lequel la source d'énergie (40) est un laser et le système comprend en outre un système d'imagerie (46) comprenant une ou plusieurs lentilles pour diriger la lumière du laser vers la zone de fusion (90).

4. Système selon la revendication 1, dans lequel la première strate (70) et la seconde strate (60) comprennent des supports et le dispositif de maintien (20) est configuré pour fixer la première strate à la seconde strate via les supports.

5. Système selon la revendication 1, dans lequel le dispositif de maintien (20) est configuré pour aligner la première strate (70) par rapport à la seconde strate (60) au moyen d'une ou de plusieurs des caractéristiques dimensionnelles des première et seconde strates et de marquages optiques des première et seconde strates.

6. Système selon la revendication 2, dans lequel la source d'énergie est adaptée à créer uniquement une zone fusion mince laissant 80/90 % du matériau d'origine dans la première strate (70) et la seconde strate (60) non affectés par la chaleur de fusion.

7. Système selon la revendication 6 comprenant en outre un capteur de température infrarouge pour contrôler la température au niveau de la zone de fusion.

8. Système selon la revendication 7, comprenant en outre un dispositif de commande, dans lequel le dispositif de commande peut régler l'énergie émise par le laser sur la base au moins en partie de la température de la zone de fusion.

9. Procédé de fabrication d'une pièce tridimensionnelle à partir d'une pluralité de strates comprenant une première strate (70) et une seconde strate (60), le procédé comprenant les étapes de :
fourniture d'une première strate (70) et d'une seconde strate (60), chaque dite strate comprenant un axe longitudinal ;
fixation d'au moins une partie de la première strate (70) par rapport à la seconde strate (60) de sorte qu'au moins une partie de la surface supérieure de la première strate entre en contact avec au moins une partie de la surface inférieure de la seconde strate ;
sollicitation de la première strate en direction de la seconde strate pour créer une zone de fusion (90) entre la première strate (70) et la seconde strate (60), la zone de fusion étant perpendiculaire à l'axe longitudinal des première et seconde strates ;
fusion de la première strate (70) et de la seconde strate (60) au niveau de la zone de fusion (90) ;
avancement de la zone de fusion (90) le long de l'axe longitudinal des première et seconde strates tout en continuant à fusionner les strates au niveau de la zone de fusion qui avance de manière à fusionner sensiblement la première strate et la seconde strate ;
répétition du processus de fusion en fusionnant n + 1 strates sur une surface supérieure de chaque n strate jusqu'à ce que la pièce tridimensionnelle soit terminée ;
**caractérisé par**
la découpe de chacune des n + 1 strates pour présenter une section transversale qui correspond à une section transversale souhaitée de l'objet tridimensionnel souhaité avant le processus de fusion.

10. Procédé selon la revendication 9, dans lequel la première strate (70) et la seconde strate (60) sont métalliques.

11. Procédé selon la revendication 9 ou 10, comprenant en outre l'étape de fusion de la première strate (70) et de la seconde strate (60) par un laser.

12. Procédé selon la revendication 9, dans lequel une section transversale des strates est découpée au moyen d'une découpe au laser et/ou d'une découpe au plasma et/ou d'une découpe au jet d'eau.

13. Procédé selon la revendication 9, comprenant en outre l'étape de fourniture d'un rouleau, dans lequel le rouleau sollicite la première strate (70) vers la seconde strate (60).

14. Procédé selon la revendication 13, comprenant en outre l'étape de fourniture d'un dispositif de maintien pour aligner la première strate (70) par rapport à la seconde strate (60) au moyen d'une ou de plusieurs des caractéristiques dimensionnelles des première et seconde strates et de marquages optiques sur les première et seconde strates.

15. Procédé selon la revendication 13, dans lequel uniquement une zone de fusion mince est créée laissant 80/90 % du matériau d'origine dans la première strate (70) et la seconde strate (60) non affectés par la chaleur de fusion.

16. Procédé selon la revendication 13 comprenant en outre l'étape de contrôle de la température au niveau de la zone de fusion (90).

17. Procédé selon la revendication 16 comprenant en outre l'étape de réglage de la puissance du laser sur la base au moins en partie de la température de la zone de fusion.
